# EUROPÄISCHE PATENTSCHRIFT

(11) **EP 2 841 307 B1**
(45) Veröffentlichungstag und Bekanntmachung des Hinweises auf die Patenterteilung: **27.11.2019**
(21) Anmeldenummer: 13726453.7
(22) Anmeldetag: 22.05.2013
(51) Int. Cl.: B60R 13/02, B61D 17/18, B61D 17/00

(54) **VERSTEIFUNGSELEMENT FÜR EIN VERKLEIDUNGSPANEEL**
REINFORCING ELEMENT FOR A TRIM PANEL
ÉLÉMENT DE RENFORCEMENT DE PANNEAU D'HABILLAGE

(30) Priorität: 29.06.2012 DE 102012211317
(43) Veröffentlichungstag der Anmeldung: 04.03.2015
(73) Patentinhaber: Siemens Mobility GmbH, 81739 München (DE)
(72) Erfinder: ROHWERDER, Dirk, 45549 Sprockhövel (DE)
(86) Internationale Anmeldenummer: PCT/EP2013/060514
(87) Internationale Veröffentlichungsnummer: WO 2014/000990

(56) Entgegenhaltungen:
- EP-A1- 0 644 096
- WO-A1-01/85517
- US-A- 5 433 151

## Beschreibung

Die Erfindung bezieht sich auf ein Versteifungselement für ein Verkleidungspaneel, insbesondere ein Deckenpaneel eines Schienenfahrzeugs.

Solche Versteifungselemente, die auch als Versteifungsrippen bezeichnet werden, dienen dazu, typischer Weise in Längsrichtung eines Fahrzeugs aneinander anschließende Deckenpaneele auszusteifen. Die Versteifungselemente verlaufen dann in Querrichtung des Schienenfahrzeugs und sind mit ihren Endabschnitten ggf. über Zwischenelemente an einem Fahrzeugrohbau montiert.

Zur Verbindung von aneinander anschließenden Deckenpaneelen ist es bisher üblich, H-Profile an den Enden der Deckenpaneele aufzukleben. Dies ist beispielsweise bei den Fahrzeugen der Baureihe 460 C Desiro ML Mittelrheinbahn der Fall. Zur Montage der Deckenpaneele sind somit im Stand der Technik sowohl Versteifungsrippen als auch die genannten H-Profile erforderlich.

Aus US-5433151-A ist ein Versteifungselement für ein Verkleidungspaneel bekannt.

Ausgehend hiervon liegt der Erfindung die Aufgabe zugrunde, bei der Montage von Verkleidungspaneelen die Zahl der zu verwendenden Montagebauteile zu vermindern.

Diese Aufgabe wird bei dem eingangs genannten Versteifungselement gelöst durch ein Versteifungselement mit den Merkmalen des Anspruchs 1.

Danach ist vorgesehen, dass das Versteifungselement als langgestrecktes Blechbiegeteil mit im Wesentlichen U-förmigem Querschnitt ausgebildet ist, entlang seines mittleren Längsabschnitts Einfüllbohrungen für Klebstoff aufweist und es seitliche des mittleren Längsabschnitts eine in Längsrichtung des Versteifungselementes verlaufende und von dem mittleren Längsabschnitt zurückspringende Sicke aufweist, die zur Einführung einer Verbindungsfeder zu einem benachbarten Verkleidungspaneel ausgebildet ist.

Ein solches Versteifungselement kann sowohl entfernt von aneinander anschließenden Enden von Verkleidungspaneelen zur Versteifung benutzt werden als auch zur Verbindung der aneinander anschließenden Verkleidungspaneele. Dabei sorgt die vorgesehene Sicke für die Möglichkeit, einen Eingriff einer Verbindungsfeder zu ermöglichen. Mit Hilfe dieser Verbindungsfeder kann dann ein Anschluss an ein im Endbereich des angrenzenden Deckenpaneels vorhandenes gleichartiges Versteifungselement herbeigeführt werden.

Bevorzugt ist der mittlere Längsabschnitt des Versteifungselementes zur Anlage an dem Verkleidungspaneel ausgebildet. In dieser Weise fließt durch die Einfüllbohrungen zugeführter Klebstoff zunächst unmittelbar in den Berührungsbereich zwischen dem Verkleidungspaneel und dem Versteifungselement, wobei überschüssiger Klebstoff in der vorgesehenen Sicke untergebracht werden kann.

Bevorzugt ist auf der der Sicke gegenüberliegenden Seite des Versteifungselements eine gleichartige Sicke vorgesehen, so dass die Einfüllbohrungen für Klebstoff zwischen diesen beiden Sicken angeordnet sind. In dieser Weise kommt es nicht mehr auf eine konkrete Ausrichtung des Versteifungselements an, um es für einen Anschluss von zwei Verkleidungspaneelen aneinander zu verwenden. In jedem Fall ist eine nach außen weisende Sicke im Endbereich eines Verkleidungspaneels zum Eingriff für eine Verbindungsfeder verfügbar.

Ein Ausführungsbeispiel der Erfindung wird nachfolgend unter Bezugnahme auf die Zeichnungen noch näher erläutert.

Es zeigen:
- Figur 1: eine perspektivische Ansicht eines Versteifungselements für ein Deckenpaneel,
- Figur 2: eine perspektivische Ansicht zweier aneinander angeschlossener Deckenpaneele unter Einsatz von Versteifungselementen nach Figur 1,
- Figur 3: eine Schnittansicht eines Deckenabschnitts eines Schienenfahrzeugs mit einem Versteifungselement nach Figur 1 und
- Figur 4: eine Schnittansicht eines anderen Deckenabschnitts eines Schienenfahrzeugs mit einem Versteifungselement nach Figur 1.

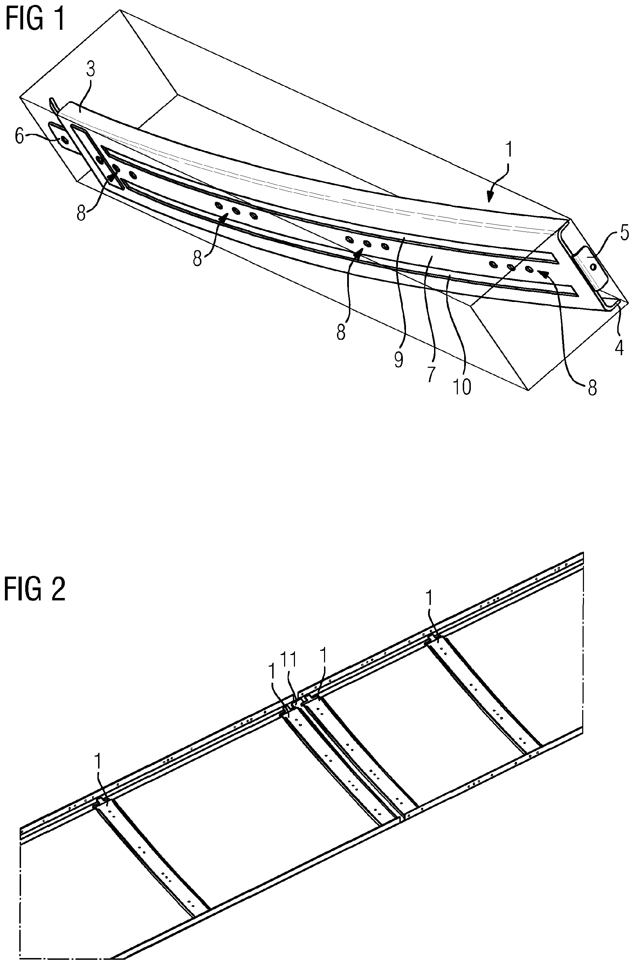

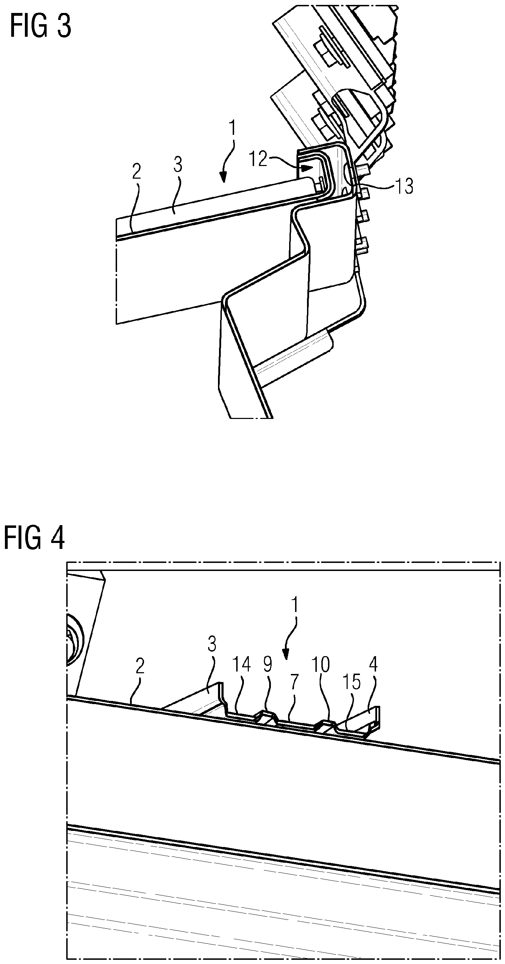

Wie Figur 1 zu entnehmen ist, weist ein Versteifungselement 1 für ein Deckenpaneel 2 (vgl. Figur 3, 4) eine langgestreckte Form auf und liegt als einteiliges Blechbiegeelement vor. Das Versteifungselement 1 zeigt einen U-förmigen Querschnitt, wobei die freien Schenkel 3, 4 des U-Profils im Einbauzustand des Versteifungselements 1 von dem Deckenpaneel 2 fortgerichtet sind. Enden des Versteifungselementes 1 weisen ein senkrecht zur Längsrichtung des Versteifungselementes 1 ausgerichtetes Halteelement 5 auf der einen Seite und ein in Längsrichtung des Versteifungselements 1 ausgerichtetes Halteelement 6 auf, die zur Festlegung der Position des Versteifungselementes 1 im Deckenbereich eines Schienenfahrzeugs dienen.

Ein mittlerer Längsabschnitt 7 des Versteifungselements 1 ist zur Anlage an dem Deckenpaneel 2 ausgebildet und zeigt im dargestellten Ausführungsbeispiel längs des Versteifungselements 1 Gruppen von jeweils drei Einfüllbohrungen 8 für Klebstoff zur Herstellung eines abschnittsweisen Stoffschlusses zwischen dem Versteifungselement 1 und dem Deckenpaneel 2.

Zu beiden Seiten des mit den Einfüllbohrungen 8 versehenen, flachen Längsabschnitts 8 ist jeweils eine Sicke 9, 10 vorgesehen, welche sich wenigstens zwischen den beiden in Längsrichtung jeweils äußeren Einfüllbohrungen 8 erstreckt. Diese Sicken 9, 10 dienen sowohl zur Aufnahme von Klebstoff, der über die Einfüllbohrungen 8 zugeführt wurde, als auch zum Eingriff mit einer Verbindungsfeder 11. Diese Verbindungsfeder 11 dient, wie insbesondere Figur 2 zu entnehmen ist, zur Verbindung zweier, sich in Längsrichtung des Schienenfahrzeugs im Dachbereich aneinander anschließender Deckenpaneele 2. In diesem Fall sind die einander zugewandten Enden der Deckenpaneele 2 jeweils mit einem Versteifungselement 1 ausgestattet und die Feder 11 verbindet die Deckenpaneele 2 durch Eingriff in die jeweiligen Sicken 9, 10 der Versteifungselemente 1.

Das Versteifungselement 1 kann selbstverständlich auch ausschließlich zur Versteifungszwecken eingesetzt werden. Dies gilt beispielsweise für die in Figur 2 gezeigten Versteifungselemente 1, die entfernt von den Enden ihrer Deckenpaneele 2 angeordnet sind. Zum Verständnis der Figur 2 ist darauf hinzuweisen, dass dort die Deckenpaneele 2 aus Veranschaulichungszwecken nicht mit dargestellt sind, sie würden die Versteifungselemente 1 und die Feder 11 verdecken.

Die relativen Lagen des Versteifungselementes 1 und eines zugeordneten Deckenpaneels 2 ergeben sich aus den Figuren 3 und 4. Dabei zeigt Figur 3, dass das Deckenpaneel 2 an der Seite des senkrecht ausgerichteten Halteelements 5 eine Falz 12 zeigt, die in einem Halteelement 13 aufgenommen ist.

Figur 4 veranschaulicht die Ausbildung der Sicken 9, 10 näher. Es ist ersichtlich, dass die Sicken 9, 10 gegenüber dem mittleren Längsabschnitt 7 und weiter außen liegenden Randbereichen 14, 15, die ebenfalls an dem Deckenpaneel 2 anliegen, zurückspringen. Bei Anordnung des Versteifungselements 1 im Endbereich eines Deckenpaneels 2, greift die Feder 11 in die jeweils näher liegende der Sicken 9, 10 ein, um ein benachbartes Deckenpaneel 2 anzuschließen.

## Patentansprüche

1. Versteifungselement (1) für ein Verkleidungspaneel (2),
**dadurch gekennzeichnet, dass**
das Versteifungselement (1) als langgestrecktes Blechbiegeteil mit im Wesentlichen U-förmigem Querschnitt ausgebildet ist, entlang seines mittleren Längsabschnitts (7) Einfüllbohrungen (8) für Klebstoff aufweist und es seitlich des mittleren Längsabschnitts (7) eine in Längsrichtung des Versteifungselementes (1) verlaufende und von dem mittleren Längsabschnitt (7) zurück springende Sicke (9, 10) aufweist, die zur Einführung einer Verbindungsfeder (11) zu einem benachbarten Verkleidungspaneel (2) ausgebildet ist.

2. Versteifungselement (1) nach Anspruch 1,
**dadurch gekennzeichnet, dass**
sein mittlerer Längsabschnitt (7) zur Anlage an dem Verkleidungspaneel (2) ausgebildet ist.

3. Versteifungselement (1) nach Anspruch 1 oder 2,
**dadurch gekennzeichnet, dass**
auf der der Sicke (9, 10) gegenüberliegenden Seite des Versteifungselements (1) eine gleichartige Sicke (9, 10) vorgesehen ist, so dass die Einfüllbohrungen (8) für Klebstoff zwischen diesen beiden Sicken (9, 10) angeordnet sind.

## Claims

1. Reinforcing element (1) for a cladding panel (2),
**characterized in that**
the reinforcing element (1) is designed as an elongate bent sheet-metal part having a substantially U-shaped cross section, has filling holes (8) for adhesive along its central longitudinal portion (7) and, to the side of the central longitudinal portion (7), has a bead (9, 10) which extends in the longitudinal direction of the reinforcing element (1), is set back from the central longitudinal portion (7) and is designed for the insertion of a connecting spring (11) to an adjacent cladding panel (2).

2. Reinforcing element (1) according to Claim 1,
**characterized in that**
its central longitudinal portion (7) is designed to bear against the cladding panel (2).

3. Reinforcing element (1) according to Claim 1 or 2,
**characterized in that**
an identical bead (9, 10) is provided on the side of the reinforcing element (1) that is opposite to the bead (9, 10), with the result that the filling holes (8) for adhesive are arranged between these two beads (9, 10).

## Revendications

1. Elément (1) de raidissement d'un panneau (2) d'habillage,
**caractérisé en ce que**
l'élément (1) de raidissement est constitué sous la forme d'une pièce pliée en tôle, s'étendant en longueur, de section transversale sensiblement en forme de U a, le long de sa partie (7) longitudinale médiane des trous (8) d'insertion d'adhésif et a, latéralement à la partie (7) longitudinale médiane, une nervure (9, 10) s'étendant dans la direction longitudinale de l'élément (1) de raidissement et ressortant de la partie (7) longitudinale médiane, nervure qui est constituée pour l'introduction d'un ressort (11) de liaison avec un panneau (2) d'habillage voisin.

2. Elément (1) de raidissement suivant la revendication 1,
**caractérisé en ce que**
sa partie (7) longitudinale médiane est constituée pour s'appliquer au panneau (2) d'habillage.

3. Elément (1) de raidissement suivant la revendication 1 ou 2,
**caractérisé en ce que**,
du côté, opposé à la nervure (9, 10), de l'élément (1) de raidissement, est prévue une nervure (9, 10) de même type de manière à ce que les trous (8) de remplissage pour de l'adhésif soient disposés entre ces deux nervures (9, 10).
